# EUROPEAN PATENT APPLICATION

(11) **EP 4 481 893 A1**
(43) Date of publication of application: **25.12.2024**
(21) Application number: 23210153.5
(22) Date of filing: 15.11.2023
(51) Int. Cl.: H01M 10/643, H01M 10/6567

(54) **BATTERY MODULE AND BATTERY CASE**

(30) Priority: 19.06.2023 US 202318211417
(71) Applicant: Xing Power Inc., Victoria, Mahé (SC)
(72) Inventor: LIN, Yu-Chung, Taipei (TW); TU, Kai-Hsiang, Taipei (TW); WANG, Teng-I, Taipei (TW); LIAO, Tzu-Wen, Taipei (TW); CHI, Yu-Shun, Taipei (TW); DAI, Shang-Chih, Taipei (TW)
(74) Representative: Yang, Shu

(57) **Abstract**

A battery module is provided. The battery module includes a front lid having a fluid inlet for flowing a fluid into the battery module and a battery case coupled to the front lid and having an accommodation region for accommodating battery cells. The battery case further includes a case frame, one or more inlet channels, and one or more outlet channels. Each of the one or more inlet channels receiving the fluid from the fluid inlet and going through the case frame for flowing the fluid through the battery case further includes one or more inlet slits for flowing the fluid into the accommodation region for cooling the battery cells. Each of the one or more outlet channels going through the case frame for flowing the fluid through the battery case is coupled to the accommodation region for flowing the fluid out of a fluid outlet of the battery module.

## Description

### FIELD

The present disclosure generally relates to a battery case and a battery module and, more particularly, to an immersion cooled battery module.

### BACKGROUND

The development of electric apparatuses, such as electric vehicles is progressing rapidly. In order to increase fast charging and slow discharging capabilities in batteries, it is important to manage the heat that is generated during the charging and discharging processes. Cooled battery packs are developed to manage such a heat.

Currently, there are two types of conventional cooled battery packs: a modular cooled battery pack and a non-modular cooled battery pack. The non-modular cooled battery pack may enclose several cell assemblies in one large liquid tank, which may cause the pack to be bulky and heavy. Thus, a non-modular cooled battery pack may be difficult to employ on various sizes of vehicle platforms. The modular cooled battery pack may solve the aforementioned problem of the non-modular cooled battery pack by making the liquid tank modularized (e.g., by enclosing each cell assembly in an independent liquid container). However, the specific parameters of the modules of a conventional modular cooled battery pack (may also be referred to as a cooled battery module or a battery module throughout the disclosure), such as overall size, shape, voltage, and current, may not be adjustable. As a result, it may be difficult for a conventional cooled battery module to adapt to the various application fields of the battery.

### SUMMARY

In some implementations of the present disclosure, an immersion-cooled battery module may include one or more battery cases that are easily assembled, for example, during the manufacturing process. The immersion-cooled battery module may be adaptable to various members of a product line for different application fields, allowing for the assembly of a different number of battery cases.

In a first aspect of the present disclosure, a battery module includes: a front lid including a fluid inlet for a fluid to flow into the battery module; and a battery case coupled to the front lid and having an accommodation region for accommodating a plurality of battery cells. The battery case further includes : a case frame; one or more inlet channels, each receiving the fluid from the fluid inlet and going through the case frame for the fluid to flow through the battery case, wherein each of the one or more inlet channels includes one or more inlet slits for the fluid to flow into the accommodation region for cooling the plurality of battery cells; and one or more outlet channels, each going through the case frame for the fluid to flow through the battery case, wherein the accommodation region is coupled to the one or more outlet channels for the fluid to flow out of a fluid outlet of the battery module.

In another implementation of the first aspect, the front lid further includes the fluid outlet, one or more lid inlets, and one or more lid outlets, each of the one or more inlet channels is coupled to a corresponding one of the one or more lid outlets for the fluid to flow from the front lid into the battery case, each of the one or more outlet channels includes one or more outlet slits for the fluid to flow from the accommodation region into a corresponding one of the one or more outlet channels, and each of the one or more outlet channels is coupled to a corresponding one of the one or more lid inlets for the fluid to flow from the battery case back to the front lid.

In another implementation of the first aspect, the battery module further includes: a back lid including the fluid outlet and one or more lid inlets for the fluid to flow out of the battery module, wherein: each of the one or more outlet channels includes one or more outlet slits for the fluid to flow from the accommodation region into a corresponding one of the one or more outlet channels, each of the one or more outlet channels is coupled to a corresponding one of the one or more lid inlets for the fluid to flow from the battery case to the back lid, and each of the one or more inlet channels is coupled to a corresponding one of one or more lid outlets on the front lid for the fluid to flow from the front lid into the battery case.

In another implementation of the first aspect, sizes of the one or more lid outlets are different from each other.

In another implementation of the first aspect, sizes of the one or more lid outlets are associated with distances between the fluid inlet and the one or more lid outlets.

In another implementation of the first aspect, the one or more outlet slits include at least one lateral slit, and an angle between a lateral edge of the case frame and a flowing direction of the fluid flowing through the at least one lateral slit is an acute angle.

In another implementation of the first aspect, a flowing direction of the fluid flowing through the one or more inlet channels is perpendicular to a flowing direction of the fluid flowing through the one or more inlet slits.

In another implementation of the first aspect, the one or more inlet slits include at least one lateral slit, and an angle between a lateral edge of the case frame and a flowing direction of the fluid flowing through the at least one lateral slit is an acute angle.

In another implementation of the first aspect, the battery module further includes: a cell holder coupled to the case frame and receiving the plurality of battery cells, wherein: the cell holder includes a plurality of extended columns, and the plurality of extended columns guides the fluid to flow along a lateral direction when the fluid flows through the at least one lateral slit.

In another implementation of the first aspect, a portion of the plurality of extended columns neighbors the one or more inlet channels, and the other portions of the plurality of extended columns neighbor the one or more outlet channels.

In another implementation of the first aspect, the battery module further includes: a cell support for supporting the plurality of battery cells with the cell holder, wherein a distance between the cell support and the plurality of extended columns is shorter than a threshold distance to prevent the fluid from flowing through the plurality of extended columns.

In a second aspect of the present disclosure, a battery case for installing in a battery module and accommodating a plurality of battery cells. The battery case includes: a case frame; a cell holder coupled to the case frame for accommodating the plurality of battery cells in an accommodation region; one or more inlet channels, each going through the case frame for a fluid to flow through the battery case, wherein each of the one or more inlet channels includes one or more inlet slits for the fluid to flow into the accommodation region for cooling the plurality of battery cells; and one or more outlet channels, each going through the case frame for the fluid to flow through the battery case, wherein the fluid flows from the accommodation region into the one or more outlet channels for flowing out of a fluid outlet of the battery module.

In another implementation of the second aspect, each of the one or more outlet channels further includes one or more outlet slits for the fluid to flow from the accommodation region into a corresponding one of the one or more outlet channels and to flow out of a fluid outlet of the battery module, the one or more outlet slits include at least one lateral slit, and an angle between a lateral edge of the case frame and a flowing direction of the fluid flowing through the lateral slit is an acute angle.

In another implementation of the second aspect, the one or more inlet slits include at least one lateral slit, and an angle between a lateral edge of the case frame and a flowing direction of the fluid flowing through the at least one lateral slit is an acute angle.

In another implementation of the second aspect, the cell holder includes a plurality of extended columns extended from an internal surface of the cell holder, and the plurality of extended columns guides the fluid to flow along a lateral direction when the fluid flows through the at least one lateral slit.

In another implementation of the second aspect, a portion of the plurality of extended columns neighbors the one or more inlet channels, and the other portions of the plurality of extended columns neighbor the one or more outlet channels.

In another implementation of the second aspect, the battery case further includes: a cell support for supporting the plurality of battery cells with the cell holder, wherein: a distance between the cell support and the plurality of extended columns is shorter than a threshold distance to prevent the fluid from flowing through the plurality of extended columns.

In a third aspect of the present disclosure, a battery module includes: a battery case accommodating a plurality of case electrodes and having an accommodation region for accommodating a plurality of battery cells. The battery module includes: a case frame; one or more inlet channels, each going through the case frame for a fluid to flow through the battery case, wherein each of the one or more inlet channels includes one or more inlet slits for the fluid to flow into the accommodation region for cooling the plurality of battery cells; and one or more outlet channels for the fluid to flow out of the accommodation region, wherein each of the one or more outlet channels goes through the case frame for the fluid to flow through the battery case; a first circuit installed in the case frame and electrically coupled to at least one of the plurality of case electrodes; and a second circuit installed in the case frame and electrically coupled to the first circuit to control a temperature of the first circuit for controlling a temperature of the fluid.

In another implementation of the third aspect, the second circuit includes one or more electrical connectors exposed on the case frame for coupling to other electrical connectors of another second circuit.

In another implementation of the third aspect, the second circuit is immersed into the fluid, and electrical power stored in at least one of the battery cells is converted into heat by the first circuit to increase the temperature of the fluid by the second circuit controlling the temperature of the first circuit.

An implementation of the third aspect further includes all of the above implementations of the first aspect.

### BRIEF DESCRIPTION OF THE DRAWINGS

The present disclosure will be better understood from the following detailed description read in light of the accompanying drawings, where:
FIG. 1 illustrates a battery module, according to an example implementation of the present disclosure.
FIGS. 2A-2C illustrate other structures of the battery module illustrated in FIG. 1, according to example implementations of the present disclosure.
FIGS. 3A-3B illustrate fluid flow structures of a battery module, according to example implementations of the present disclosure.
FIGS. 4A-4B illustrate perspective views of a battery module, according to an example implementation of the present disclosure.
FIG. 5 illustrates a partially exploded view of the battery module illustrated in FIG. 4B, according to an example implementation of the present disclosure.
FIGS. 6A-6B illustrate, respectively, a front view and a back view of the front lid illustrated in FIG. 4A, according to an example implementation of the present disclosure.
FIG. 6C illustrates a back view of the front lid illustrated in FIG. 6B without a first flow control member, according to an example implementation of the present disclosure.
FIG. 6D illustrates a perspective view of the first flow control member illustrated in FIG. 6B, according to an example implementation of the present disclosure.
FIGS. 7A-7B illustrate, respectively, a front view and a back view of the back lid illustrated in FIG. 4B, according to an example implementation of the present disclosure.
FIG. 7C illustrates a back view of the back lid illustrated in FIG. 7B without a second flow control member, according to an example implementation of the present disclosure.
FIG. 8A illustrates a perspective view of the battery case illustrated in FIG. 5, according to an example implementation of the present disclosure.
FIG. 8B illustrates a front view of the battery case illustrated in FIG. 5, according to an example implementation of the present disclosure.
FIG. 9A illustrates a partially enlarged view of a top-left corner of the battery case illustrated in FIG. 8A, according to an example implementation of the present disclosure.
FIG. 9B illustrates a cross-sectional view of the battery case taken along line A-A of FIG. 8B, according to an example implementation of the present disclosure.
FIG. 9C illustrates an enlarged view of a region B illustrated in FIG. 8B, according to an example implementation of the present disclosure.
FIG. 10 illustrates a partially enlarged view of a top-left corner of the battery case, according to another example implementation of the present disclosure.
FIG. 11A illustrates a perspective view of a cell support, according to an example implementation of the present disclosure.
FIG. 11B illustrates a perspective view of a combination of the battery case and the cell support illustrated, respectively, in FIG. 8A and FIG. 11A, according to an example implementation of the present disclosure.
FIG. 12A illustrates a front view of the combination of the battery case and the cell support illustrated in FIG. 11B, according to an example implementation of the present disclosure.
FIG. 12B illustrates a cross-sectional view of the combination of the battery case and the cell support illustrated in FIG. 12A, taken along line C-C of FIG. 12A, according to an example implementation of the present disclosure.
FIG. 13A illustrates a perspective view of a battery module illustrated in FIG. 4B without the case frames illustrated in FIG. 5, according to an example implementation of the present disclosure.
FIG. 13B illustrates electronic connection structures of management circuits illustrated in FIG. 13A, according to example implementations of the present disclosure.
FIG. 14 illustrates a circuit diagram of the battery cells, the management circuit, and the connection circuits illustrated in FIG. 13A and FIG. 13B, according to an example implementation of the present disclosure.

### DETAILED DESCRIPTION

The following disclosure contains specific information pertaining to exemplary implementations in the present disclosure. The drawings in the present disclosure and their accompanying detailed disclosure are directed to merely exemplary implementations. However, the present disclosure is not limited to merely these exemplary implementations. Other variations and implementations of the present disclosure will occur to those skilled in the art. Unless noted otherwise, like or corresponding elements among the figures may be indicated by like or corresponding reference numerals. Moreover, the drawings and illustrations in the present disclosure are generally not to scale and are not intended to correspond to actual relative dimensions.

For the purposes of consistency and ease of understanding, like features are identified (although, in some examples, not shown) by numerals in the exemplary figures. However, the features in different implementations may be different in other respects, and thus shall not be narrowly confined to what is shown in the figures.

The disclosure uses the phrases "in one implementation," "in some implementations," and so on, which may each refer to one or more of the same or different implementations. The term "coupled" is defined as connected, directly, or indirectly through intervening components, and is not necessarily limited to physical connections. The term "comprising" means "including, but not necessarily limited to" it specifically indicates open-ended inclusion or membership in the so-described combination, group, series, and the equivalent.

Additionally, for the purposes of explanation and non-limitation, specific details, such as functional entities, techniques, protocols, standards, and the like, are set forth for providing an understanding of the described technology. In other examples, detailed disclosure of well-known methods, technologies, systems, architectures, and the like are omitted so as not to obscure the disclosure with unnecessary details.

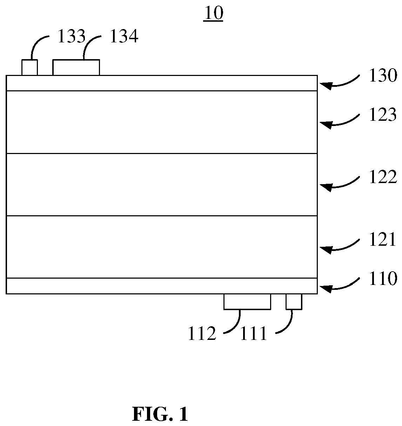

FIG. 1 illustrates a battery module 10, according to an example implementation of the present disclosure. The battery module 10 may include a front lid 110, a plurality of battery cases 121-123, and a back lid 130. The front lid 110 may be coupled to the battery case 121, and the back lid 130 may be coupled to the battery case 123. In some implementations, the number of battery cases in the battery module 10 may be equal to or greater than two. For example, the number of battery cases in the battery module 10 may be equal to two, three, or other positive numbers greater than three. In some implementations, the front lid 110 may be coupled to a first one of the battery cases and the back lid 130 may be coupled to a last one of the battery cases when the number of battery cases in the battery module 10 is equal to or greater than two. In some implementations, the battery module 10 may include only one battery case (e.g., only battery case 121), so the front lid 110 may be coupled to one side of the battery case 121 and the back lid 130 may be coupled to the other side of the battery case 121.

In some implementations, the front lid 110 may include a fluid inlet 111 and a first battery interface 112, and the back lid 130 may include a fluid outlet 133 and a second battery interface 134. The fluid inlet 111 may be included in the front lid 110 for a fluid to flow into the battery module 10, and the fluid outlet 133 may be included in the back lid 130 for the fluid to flow out of the battery module 10. Thus, the fluid may flow through the battery cases 121-123 by flowing into the battery module 10 through the fluid inlet 111 of the front lid 110 and flowing out of the battery module 10 through the fluid outlet 133 of the back lid 130. In some implementations, the first battery interface 112 may be one of a positive electrode and a negative electrode of the battery module 10, and the second battery interface 134 may be the other one of the positive electrode and the negative electrode of the battery module 10.

In some implementations, each of the battery cases 121-123 may further include a plurality of battery cells (not shown) and a plurality of case electrodes (not shown). In some implementations, each of the case electrodes may be an electrode plate. Each of the case electrodes may be coupled to a portion of the battery cells in a corresponding one of the battery cases. In some implementations, one of the case electrodes in the first one of the battery cases may be electrically coupled to the first battery interface 112 and one of the case electrodes in the last one of the battery cases may be electrically coupled to the second battery interface 134, when the number of battery cases in the battery module 10 is equal to or greater than two. In addition, another one of the case electrodes in the first one of the battery cases may be electrically coupled to another one of the case electrodes in a second one of the battery cases (e.g., neighboring the first one of the battery cases), and one of the case electrodes in the last one of the battery cases may be electrically coupled to one of the case electrodes, for example, in a penultimate one of the battery cases. In some implementations, one of the case electrodes in the battery case may be electrically coupled to the first battery interface 112 and another one of the case electrodes in the battery case may be electrically coupled to the second battery interface 134, for example, when the number of battery cases in the battery module 10 is equal to one.

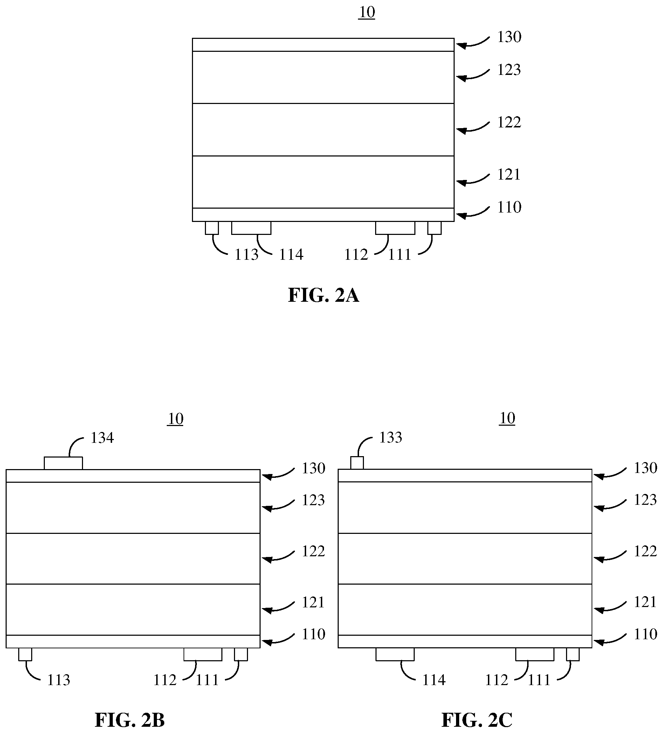

FIGS. 2A-2C illustrate other structures of the battery module 10 illustrated in FIG. 1, according to example implementations of the present disclosure. In FIG. 2A, the front lid 110 may further include the fluid inlet 111, the first battery interface 112, a fluid outlet 113, and a second battery interface 114. Thus, in FIG. 2A, the first battery interface 112 may be one of the positive electrode and the negative electrode of the battery module 10, and the second battery interface 114 may be the other one of the positive electrode and the negative electrode of the battery module 10. In FIG. 2B, the front lid 110 may further include the fluid inlet 111, the first battery interface 112, and the fluid outlet 113, and the back lid 130 may further include the second battery interface 134. Thus, in FIG. 2B, the first battery interface 112 may be one of the positive electrode and the negative electrode of the battery module 10, and the second battery interface 134 may be the other one of the positive electrode and the negative electrode of the battery module 10. In FIG. 2C, the front lid 110 may further include the fluid inlet 111, the first battery interface 112, and the second battery interface 114, and the back lid 130 may further include the fluid outlet 133. Thus, in FIG. 2C, the first battery interface 112 may be one of the positive electrode and the negative electrode of the battery module 10, and the second battery interface 114 may be the other one of the positive electrode and the negative electrode of the battery module 10.

In some implementations, the locations of the positive electrode and the negative electrode of the battery module 10 may be adjusted based on the distribution of the case electrodes and the directions of the battery cells. In some implementations, the locations of the fluid inlet 111 and the fluid outlet 133 of the battery module 10 may be adjusted based on a fluid flow structure of the battery module 10.

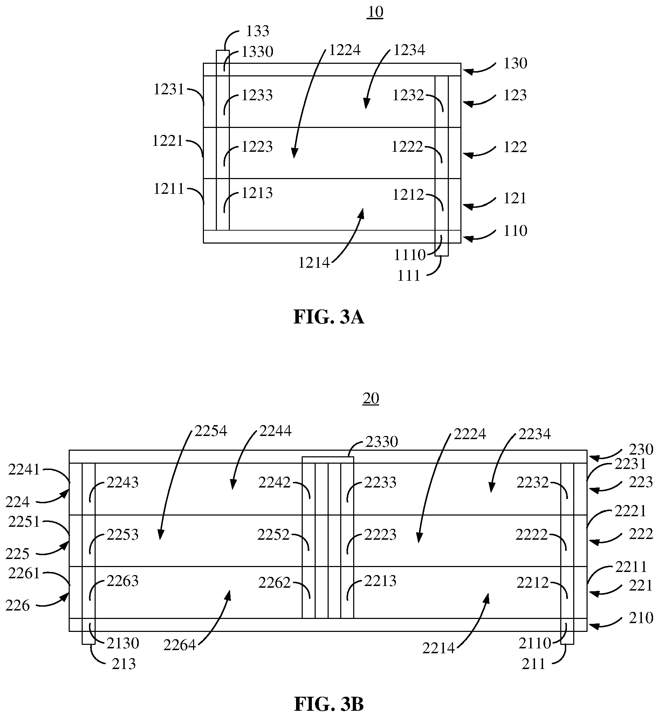

FIGS. 3A-3B illustrate fluid flow structures of a battery module, according to example implementations of the present disclosure. In order to clearly illustrate the fluid flow structures of the battery module, in FIG. 3A and FIG. 3B, the first and second battery interfaces (e.g., as shown in FIG. 1 and FIGS. 2A-2C) are omitted, but each of the battery modules in FIG. 3A and FIG. 3B may still include the first battery interface and the second battery interface.

In some implementations, such as in FIG. 3A, the front lid 110 may further include one or more lid outlets 1110. Each of the one or more lid outlets 1110 may be coupled to the fluid inlet 111 for the fluid to flow from the front lid 110 into the battery cases 121-123. In some implementations, the back lid 130 may further include one or more lid inlets 1330. Each of the one or more lid inlets 1330 may be coupled to the fluid outlet 133 for the fluid to flow from the battery cases 121-123 out of the battery module 10.

In some implementations, the battery case 121 may include a case frame 1211, one or more inlet channels 1212, one or more outlet channels 1213, and an accommodation region 1214. The battery case 122 may include a case frame 1221, one or more inlet channels 1222, one or more outlet channels 1223, and an accommodation region 1224, and the battery case 123 may include a case frame 1231, one or more inlet channels 1232, one or more outlet channels 1233, and an accommodation region 1234.

In some implementations, each of the one or more inlet channels 1212-1232 may be a through-hole going through a corresponding one of the case frames 1211-1231 for the fluid to flow through the corresponding one of the case frames 1211-1231. Thus, each of the one or more inlet channels 1212 may be coupled to a corresponding one of the one or more lid outlets 1110 for the fluid to flow from the front lid 110 into the battery case 121, each of the one or more inlet channels 1222 may be coupled to a corresponding one of the one or more inlet channels 1212 for the fluid to flow from the battery case 121 into the battery case 122, and each of the one or more inlet channels 1232 may be coupled to a corresponding one of the one or more inlet channels 1222 for the fluid to flow from the battery case 122 into the battery case 123. In some implementations, each of the one or more inlet channels 1212-1232 may further include one or more inlet slits (not shown) for the fluid to flow into a corresponding one of the accommodation regions 1214-1234 for cooling the battery cells in the corresponding one of the accommodation regions 1214-1234.

In some implementations, each of the accommodation regions 1214-1234 may be coupled to the one or more inlet channels in a corresponding one of the battery cases 121-123 for the fluid to flow into the accommodation regions 1214-1234 through the one or more inlet slits in the corresponding one of the battery cases 121-123. In some implementations, each of the accommodation regions 1214-1234 may also be coupled to the one or more outlet channels in a corresponding one of the battery cases 121-123 for the fluid to flow out of the accommodation regions 1214-1234 through the one or more outlet slits (not shown) in the corresponding one of the battery cases 121-123 for flowing the fluid out of the battery module 10 through the fluid outlet 133.

In some implementations, each of the outlet channels 1213-1233 may include one or more outlet slits for the fluid to flow from a corresponding one of the accommodation regions 1214-1234 into a corresponding one of the outlet channels 1213-1233. In some implementations, each of the outlet channels 1213-1233 may be a through-hole going through a corresponding one of the case frames 1211-1231 for the fluid to flow through the corresponding one of the case frames 1211-1231. Thus, each of the one or more outlet channels 1213 may be coupled to a corresponding one of the one or more outlet channels 1223 for the fluid to flow from the battery case 121 into the battery case 122, each of the one or more outlet channels 1223 may be coupled to a corresponding one of the one or more outlet channels 1233 for the fluid to flow from the battery case 122 into the battery case 123, and each of the one or more outlet channels 1233 may be coupled to a corresponding one of the one or more lid inlets 1330 for the fluid to flow from the battery case 123 into the back lid 130 for flowing out of the battery module 10 through the fluid outlet 133.

In some implementations, as shown in FIG. 3B, a battery module 20 may include a front lid 210, a plurality of battery cases 221-226, and a back lid 230. The front lid 210 may include a fluid inlet 211, a fluid outlet 213, one or more lid outlets 2110, and one or more lid inlets 2130. Each of the battery cases 221-226 in the battery module 20 may be substantially similar or identical to the battery cases 121-123 in the battery module 10. Thus, the battery case 221 may include a case frame 2211, one or more inlet channels 2212, one or more outlet channels 2213, and an accommodation region 2214. The battery case 222 may include a case frame 2221, one or more inlet channels 2222, one or more outlet channels 2223, and an accommodation region 2224, and the battery case 226 may include a case frame 2261, one or more inlet channels 2262, one or more outlet channels 2263, and an accommodation region 2264.

In some implementations, an installation process and method of the battery cases 121-123 in the battery module 10 may be substantially similar or identical to those of the battery cases 221-223 in the battery module 20 and those of the battery cases 224-226 in the battery module 20. In addition, a positional relationship between the battery cases 121-123 in the battery module 10 may be substantially similar or identical to that of the battery cases 221-223 in the battery module 20 and that of the battery cases 224-226 in the battery module 20. However, an installation direction of the battery cases 121-123 in the battery module 10 may be substantially similar or identical to one of an installation direction of the battery cases 221-223 and an installation direction of the battery cases 224-226 and opposite the other one of the installation direction of the battery cases 221-223 and the installation direction of the battery cases 224-226. In FIG. 3B, the installation direction of the battery cases 121-123 in the battery module 10 may be substantially similar or identical to that of the battery cases 221-223 and opposite that of the battery cases 224-226. Thus, the back lid 230 may include an intermediate channel 2330 for coupling the one or more outlet channels 2233 to the one or more inlet channels 2242 for the fluid to flow from the battery case 223 into the battery case 224. In addition, the one or more lid inlets 2130 and the fluid outlet 213 may be included in the front lid 210 for the fluid to flow from the battery case 226 out of the battery module 20.

In some implementations, each of the one or more inlet channels 2212 may be coupled to a corresponding one of the one or more lid outlets 2110 for the fluid to flow from the front lid 210 into the battery case 221. In some implementations, each of the one or more inlet channels 2242 may be coupled to the intermediate channel 2330 for the fluid to flow from the back lid 230 into the battery case 224. In some implementations, each of the one or more inlet channels 2222, 2232, 2252, and 2262 may be respectively coupled to a corresponding one of the one or more inlet channels 2212, 2222, 2242, and 2252 for the fluid to flow from a previous one of the battery cases 221-226 into a corresponding one of battery cases 221-226. In some implementations, each of the one or more inlet channels 2212-2262 may include one or more inlet slits (not shown) for the fluid to flow into a corresponding one of the accommodation regions 2214-2264 for cooling the plurality of battery cells in the battery cases 221-226.

In some implementations, each of the one or more outlet channels 2213-2263 may include one or more outlet slits (not shown) for the fluid to flow from a corresponding one of the accommodation regions 2214-2264 into a corresponding one of the one or more outlet channels 2213-2263. In some implementations, each of the one or more outlet channels 2263 may be coupled to a corresponding one of the one or more lid inlets 2130 for the fluid to flow from the battery case 226 back to the front lid 210. In some implementations, each of the one or more outlet channels 2233 may be coupled to the intermediate channel 2330 for the fluid to flow from the battery case 223 into the back lid 230. In some implementations, each of the one or more outlet channels 2213, 2223, 2243, and 2253 may be respectively coupled to a corresponding one of the one or more outlet channels 2223, 2233, 2253, and 2263 for the fluid to flow from a corresponding one of battery cases 221-226 into a next one of the battery cases 221-226.

In some implementations, the size of the battery module 20 may be (substantially) larger that the size of the battery module 10. For example, in some implementations, the battery module 20 may be twice as large as the battery module 10. In some other implementations, the battery module 20 may be more or less than twice as large as the battery module 10. In some implementations, the front lid 110 may further include the fluid outlet 113, as shown in FIG. 2A , and the battery module 10 may further include a tube for coupling the one or more lid inlets 1330 of the back lid 130, as shown in FIG. 3A, to one or more lid inlets (not shown) of the front lid 110 for coupling the fluid outlet 113 to the one or more lid inlets 1330. Thus, even if both of the fluid inlet 111 and the fluid outlet 113 are included in the front lid 110, the number of battery cases in the battery module 10 may remain unchanged and the size of the battery module 10 may also (almost) remain unchanged.

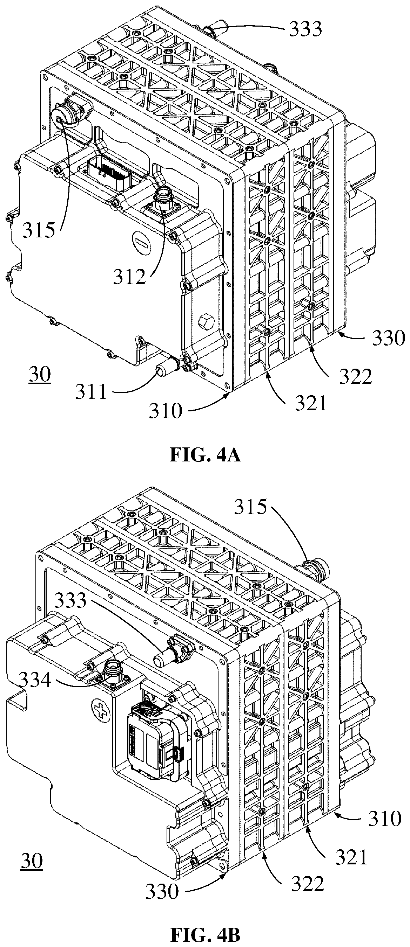

FIGS. 4A-4B illustrate perspective views of a battery module 30, according to an example implementation of the present disclosure. The battery module 30 may include a front lid 310, a plurality of battery cases 321-322, and a back lid 330. The front lid 310 may be coupled to the battery case 321, and the back lid 330 may be coupled to the battery case 322. In some implementations, the front lid 310, the battery cases 321-322, and the back lid 330 may be sealed together to prevent a fluid from leaking out of the battery module 30.

In some implementations, the front lid 310 may include a fluid inlet 311 and a first battery interface 312, and the back lid 330 may include a fluid outlet 333 and a second battery interface 334. In some implementations, the fluid inlet 311 may be included in the front lid 310 for the fluid to flow into the battery module 30. In some implementations, the fluid outlet 333 may be included in the back lid 330 for the fluid to flow out of the battery module 30. Thus, the fluid may flow into the battery cases 321-322 through the fluid inlet 311 of the front lid 310 and flow out of the battery cases 321-322 through the fluid outlet 333 of the back lid 330. In some implementations, the fluid inlet 311 may be moved to the back lid 330 for the fluid to flow into the battery module 30. In some implementations, the fluid outlet 333 may be included in the front lid 310 (e.g., the fluid outlet 113 in FIG. 2B) for the fluid to flow out of the battery module 30. Thus, the fluid inlet 311 and the fluid outlet 333 may be included in the same lid, or may be included in different lids.

In some implementations, the first battery interface 312 may be a negative electrode of the battery module 30, and the second battery interface 334 may be a positive electrode of the battery module 30. In some implementations, the first battery interface 312 may be a positive electrode of the battery module 30, and the second battery interface 334 may be a negative electrode of the battery module 30.

In some implementations, the number of battery cases may be equal to two, three, or other positive numbers greater than three. In some implementations, there may be only one battery case included in the battery module 30.

In some implementations, the front lid 310 may further include a first fluid hole 315, and the back lid 330 may further include a second fluid hole (not shown). In some implementations, the first fluid hole 315 and the second fluid hole may have, respectively, the same functions as the fluid inlet 311 and the fluid outlet 333. For example, the fluid may flow into the battery module 30 from the second fluid hole and flow out of the battery module 30 through the first fluid hole 315. Thus, the battery module 30 may have two sets of fluid inlets and the fluid outlets. In some implementations, it may be unnecessary to include the first fluid hole and the second fluid hole in the battery module 30, so the battery module 30 may have only one set of the fluid inlet and the fluid outlet.

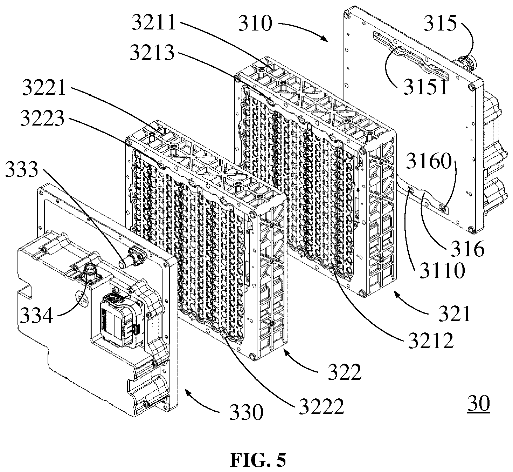

FIG. 5 illustrates a partially exploded view of the battery module 30 illustrated in FIG. 4B, according to an example implementation of the present disclosure. The battery module 30 may include the front lid 310, the battery cases 321-322, and the back lid 330. The front lid 310 may be coupled to the battery case 321, and the back lid 330 may be coupled to the battery case 322.

With reference to FIG. 4A and FIG. 5, in some implementations, the front lid 310 may further include the fluid inlet 311, one or more lid outlets 3110, and a first flow control member 316. The first flow control member 316 may have one or more first member openings 3160. In some implementations, the one or more lid outlets 3110 may be coupled to the fluid inlet 311 for the fluid to flow out of the front lid 311 through the one or more lid outlets 3110. In some implementations, the first flow control member 316 may cover one or more outlet holes (not shown) to generate the one or more lid outlets 3110. In some implementations, the front lid 310 may further include one or more first lid holes 3151. In some implementations, sizes and shapes of the one or more outlet holes may be identical (or substantially similar) to or different from sizes and shapes of the one or more first lid holes 3151. In some implementations, when the fluid flows through the first fluid hole 315, a flow control member may cover the one or more first lid holes 3151 to generate one or more first lid openings (not shown).

In some implementations, the battery case 321 may further include a case frame 3211, one or more inlet channels 3212, and one or more outlet channels 3213. In some implementations, each of the one or more inlet channels 3212 and the one or more outlet channels 3213 may be a through-hole going through the case frame 3211 for the fluid to flow through the battery case 321. Thus, when the battery case 321 is coupled to the front lid 310, each of the one or more inlet channels 3212 may be coupled to a corresponding one of the one or more lid outlets 3110 for receiving the fluid via the fluid inlet 311 of the front lid 310 into the battery case 321. In some implementations, when the battery case 321 is coupled to the front lid 310, each of the one or more inlet channels 3212 may be aligned with a corresponding one of the one or more lid outlets 3110 for the fluid to flow from the one or more lid outlets 3110 into the one or more inlet channels 3212 and to further flow out of the battery case 321 from the one or more outlet channels 3213. In some implementations, each of the one or more inlet channels 3212 may be positioned in a portion of a wall of the case frame 3211, and each of the one or more outlet channels 3212 may be positioned in a portion of another wall of the case frame 3211.

In some implementations, the battery case 322 may further include a case frame 3221, one or more inlet channels 3222, and one or more outlet channels 3223. In some implementations, each of the one or more inlet channels 3222 and the one or more outlet channels 3223 may be a through-hole going through the case frame 3221. Thus, when the battery case 322 is coupled to the battery case 321, each of the one or more inlet channels 3222 may be coupled to a corresponding one of the one or more inlet channels 3212. In some implementations, when the battery case 322 is coupled to the battery case 321, each of the one or more inlet channels 3222 may be aligned with a corresponding one of the one or more inlet channels 3212 for the fluid to flow from the one or more inlet channels 3212 into the one or more inlet channels 3222 and to further flow out of the battery case 322 from the one or more inlet channels 3222. In addition, when the battery case 322 is coupled to the battery case 321, each of the one or more outlet channels 3223 may be coupled to a corresponding one of the one or more outlet channels 3213. In some implementations, when the battery case 322 is coupled to the battery case 321, each of the one or more outlet channels 3223 may be aligned with a corresponding one of the one or more outlet channels 3213 for the fluid to flow from the one or more outlet channels 3213 into the one or more outlet channels 3223 and to further flow out of the battery case 322 from the one or more outlet channels 3223.

With reference to FIG. 4B and FIG. 5, in some implementations, the back lid 330 may further include the fluid outlet 333, one or more lid inlets (not shown), and a second flow control member (not shown), and the second flow control member may also have one or more second member openings (not shown). In some implementations, the one or more lid inlets may be coupled to the fluid outlet 333 for the fluid to flow into the back lid 330 through the one or more lid inlets and to flow out of the battery module 30. In addition, when the back lid 330 is coupled to the battery case 322, each of the one or more lid inlets may be coupled to a corresponding one of the one or more outlet channels 3223 for the fluid to flow from the battery case 322 to the back lid 330. In some implementations, when the back lid 330 is coupled to the battery case 322, each of the one or more lid inlets may be aligned with a corresponding one of the one or more outlet channels 3223 for the fluid to flow from the one or more outlet channels 3223 into the one or more lid inlets and to further flow out of the back lid 330 of the battery module 30 from the fluid outlet 333.

In some implementations, the second flow control member may cover one or more inlet holes (not shown) to generate the one or more lid inlets. In some implementations, the back lid 330 may further include one or more second lid holes (not shown). In some implementations, the sizes and shapes of the one or more inlet holes may be identical to or different from sizes and shapes of the one or more second lid holes. In some implementations, when the fluid flows through the second fluid hole on the back lid 330, a flow control member may cover the one or more second lid holes to generate one or more second lid openings (not shown).

In some implementations, when the battery case 321 is coupled to the front lid 310, each of the one or more outlet channels 3213 may be coupled to a corresponding one of the one or more first lid openings. In some implementations, when the battery case 321 is coupled to the front lid 310, each of the one or more outlet channels 3213 may be aligned with a corresponding one of the one or more first lid openings for the fluid to flow between the one or more outlet channels 3213 and the one or more first lid openings.

In some implementations, when the back lid 330 is coupled to the battery case 322, each of the one or more second lid openings may be coupled to a corresponding one of the one or more inlet channels 3222. In some implementations, when the back lid 330 is coupled to the battery case 322, each of the one or more second lid openings may be aligned with a corresponding one of the one or more inlet channels 3222 for the fluid to flow between the one or more second lid openings and the one or more inlet channels 3222.

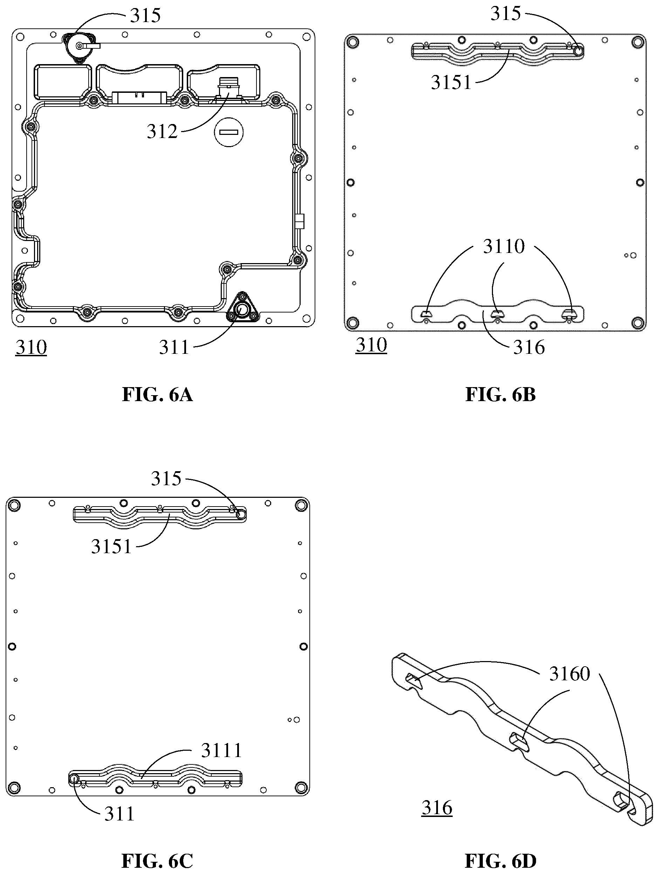

FIGS. 6A-6B illustrate, respectively, a front view and a back view of the front lid 310 illustrated in FIG. 4A, according to an example implementation of the present disclosure. In some implementations, an external surface of the front lid 310 may include the fluid inlet 311, the first battery interface 312, and the first fluid hole 315. In addition, an internal surface of the front lid 310 may further include the one or more lid outlets 3110, the one or more first lid holes 3151, and the first flow control member 316.

In some implementations, an inlet hole of the fluid inlet 311 may be a through-hole going through the front lid 310. Thus, the internal surface of the front lid 310 may also include the inlet hole of the fluid inlet 311. In some implementations, the inlet hole of the fluid inlet 311 may be coupled to the one or more lid outlets 3110. Thus, when the fluid flows into the front lid 310 through the fluid inlet 311, the fluid may flow out of the front lid 310 through the one or more lid outlets 3110. In some implementations, the inlet hole of the fluid inlet 311 may not be aligned with the one or more lid outlets 3110.

In some implementations, a central hole of the first fluid hole 315 may be a through-hole going through the front lid 310. Thus, the internal surface of the front lid 310 may include the central hole of the first fluid hole 315. In some implementations, the central hole of the first fluid hole 315 may be coupled to the one or more first lid holes 3151. Thus, when the fluid flows into the front lid 310 through the first fluid hole 315, the fluid may flow out of the front lid 310 through the one or more first lid holes 3151. In some implementations, when the fluid flows out of the front lid 310 through the first fluid hole 315, the fluid may flow into the front lid 310 through the one or more first lid holes 3151.

FIG. 6C illustrates a back view of the front lid 310 illustrated in FIG. 6B without a first flow control member 316, according to an example implementation of the present disclosure, and FIG. 6D illustrates a perspective view of the first flow control member 316 illustrated in FIG. 6B, according to an example implementation of the present disclosure.

In some implementations, one or more outlet holes 3111 and the inlet hole of the fluid inlet 311 may be exposed on the internal surface of the front lid 310 when the first flow control member 316 is removed from the front lid 310. As shown in FIG. 6C, compared to FIG. 6B, in some implementations, the inlet hole of the fluid inlet 311 may not be aligned with the one or more lid outlets 3110.

In some implementations, the first flow control member 316 may have one or more first member openings 3160. In some implementations, the one or more first member openings 3160 may be different from each other. In some implementations, shapes of the one or more first member openings 3160 may be identical to each other, but sizes of the one or more first member openings 3160 may be different from each other. In some implementations, shapes and sizes of the one or more first member openings 3160 may be different from each other.

In some implementations, when the front lid 310 includes the first flow control member 316, the one or more first member openings 3160 may be regarded as the one or more lid outlets 3110. Thus, in some implementations, each of the one or more lid outlets 3110 may be different from the other ones of the lid outlets 3110. In some implementations, shapes of the one or more lid outlets 3110 may be identical to each other, but sizes of the one or more lid outlets 3110 may be different from each other. In some implementations, shapes and sizes of the one or more lid outlets 3110 may be different from each other.

In some implementations, the first flow control member 316 may be directly integrated with the front lid 310 to form a single component. Thus, the front lid 310 may include one or more first fluid cavities (not shown). In some implementations, the one or more first fluid cavities may be coupled to each other for the fluid to flow between the one or more first fluid cavities and may each be coupled to at least one of the one or more lid outlets 3110 for the fluid to flow out of the front lid 310. In addition, the inlet hole of the fluid inlet 311 may be directly coupled to one of the one or more first fluid cavities for the fluid to flow into the front lid 310.

With reference to FIG. 5 and FIG. 6B, in some implementations, the number of one or more lid outlets 3110 may be equal to the number of one or more inlet channels 3212, since each of the one or more lid outlets 3110 is coupled to a corresponding one of the one or more inlet channels 3212. In some implementations, the number of one or more lid outlets 3110 may be equal to one, and the number of one or more inlet channels 3212 may also be equal to one. In some implementations, as shown in FIG. 6B, the number of one or more lid outlets 3110 may be equal to three, and the number of one or more inlet channels 3212 may also be equal to three. In other words, the front lid 310 may include a plurality of lid outlets 3110, and the battery case 321 may also include the same number of inlet channels 3212.

With reference to FIG. 5 and FIG. 6B, in some implementations, when the number of one or more lid outlets 3110 is greater than one, one of the one or more lid outlets 3110 neighboring the inlet hole of the fluid inlet 311 may be smaller than one of the one or more lid outlets 3110 further from the inlet hole of the fluid inlet 311. In some implementations, the sizes of the one or more lid outlets 3110 may be associated with distances between the inlet hole of the fluid inlet 311 and the one or more lid outlets 3110. In some implementations, the sizes of the one or more lid outlets 3110 may be determined based on the distances between the inlet hole of the fluid inlet 311 and the one or more lid outlets 3110. In some implementations, the sizes of the one or more lid outlets 3110 may be increased when the distances between the inlet hole of the fluid inlet 311 and the one or more lid outlets 3110 are increased. Thus, as shown in FIG. 6B, the leftmost one of the lid outlets 3110 may be the smallest one of the lid outlets 3110, and the rightmost one of the lid outlets 3110 may be the largest one of the lid outlets 3110.

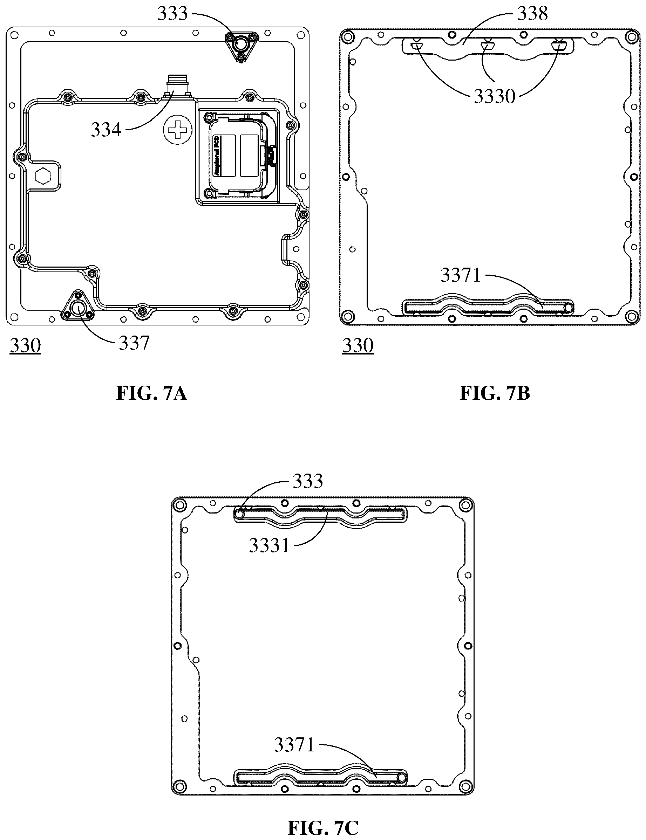

FIGS. 7A-7B illustrate, respectively a front view and a back view of the back lid 330 illustrated in FIG. 4B, according to an example implementation of the present disclosure. In some implementations, an external surface of the back lid 330 may include the fluid outlet 333, the second battery interface 334, and the second fluid hole 337. In addition, an internal surface of the back lid 330 may further include the one or more lid inlets 3330, the one or more second lid holes 3371, and the second flow control member 338.

In some implementations, an outlet hole of the fluid outlet 333 may be a through-hole going through the back lid 330. Thus, the internal surface of the back lid 330 may also include the outlet hole of the fluid outlet 333. In some implementations, the outlet hole of the fluid outlet 333 may be coupled to the one or more lid inlets 3330. Thus, the fluid may first flow into the back lid 330 through the one or more lid inlets 3330, and then flow out of the back lid 330 through the fluid outlet 333. In some implementations, the outlet hole of the fluid outlet 333 may not be aligned with the one or more lid inlets 3330.

In some implementations, a central hole of the second fluid hole 337 may be a through-hole going through the back lid 330. Thus, the internal surface of the back lid 330 may also include the central hole of the second fluid hole 337. In some implementations, the central hole of the second fluid hole 337 may be coupled to the one or more second lid holes 3371. Thus, when the fluid flows into the back lid 330 through the second fluid hole 337, the fluid may flow out of the back lid 330 through the one or more second lid holes 3371. In some implementations, when the fluid flows out of the back lid 330 through the second fluid hole 337, the fluid may flow into the back lid 330 through the one or more second lid holes 3371.

FIG. 7C illustrates a back view of the back lid 330 illustrated in FIG. 7B without a second flow control member 338, according to an example implementation of the present disclosure. In some implementations, the one or more inlet holes 3331 and the outlet hole of the fluid outlet 333 may be exposed on the internal surface of the back lid 330 when the second flow control member 338 is removed from the back lid 330. As shown in FIG. 7C, compared to FIG. 7B, in some implementations, the outlet hole of the fluid outlet 333 may not be aligned with the one or more lid inlets 3330.

In some implementations, the second flow control member 338 may have one or more second member openings. In some implementations, the one or more second member openings may be different from each other. In some implementations, shapes of the one or more second member openings may be identical to each other, but sizes of the one or more second member openings may be different from each other. In some implementations, shapes and sizes of the one or more second member openings may be different from each other.

In some implementations, when the back lid 330 includes the second flow control member 338, the one or more second member openings may be regarded as the one or more lid inlets 3330. Thus, in some implementations, the one or more lid inlets 3330 may be different from each other. In some implementations, shapes of the one or more lid inlets 3330 may be identical to each other, but sizes of the one or more lid inlets 3330 may be different from each other. In some implementations, shapes and sizes of the one or more lid inlets 3330 may be different from each other.

In some implementations, the second flow control member 338 may be directly integrated with the back lid 330 to form a single component. Thus, the back lid 330 may include one or more second fluid cavities (not shown). In some implementations, the one or more second fluid cavities may be coupled to each other for the fluid to flow between the one or more second fluid cavities and coupled to at least one of the one or more lid inlets 3330 for the fluid to flow into the back lid 330. In addition, the outlet hole of the fluid outlet 333 may be directly coupled to one of the one or more second fluid cavities for the fluid to flow out of the back lid 330.

With reference to FIG. 5 and FIG. 7B, in some implementations, the number of one or more lid inlets 3330 may be equal to the number of one or more outlet channels 3223, since each of the one or more lid inlets 3330 is coupled to a corresponding one of the one or more outlet channels 3223. In some implementations, the number of one or more lid inlets 3330 may be equal to one, and the number of one or more outlet channels 3223 may also be equal to one. In some implementations, as shown in FIG. 7B, the number of one or more lid inlets 3330 may be equal to three, and the number of one or more outlet channels 3223 may also be equal to three. In other words, the back lid 330 may include a plurality of lid inlets 3330, and the battery case 322 may include of the same number of outlet channels 3223.

With reference to FIG. 5 and FIG. 7B, in some implementations, when the number of one or more lid inlets 3330 is greater than one, one of the one or more lid inlets 3330 neighboring the outlet hole of the fluid outlet 333 may be smaller than one of the one or more lid inlets 3330 further from the outlet hole of the fluid outlet 333. In some implementations, the sizes of the one or more lid inlets 3330 may be determined based on distances between the outlet hole of the fluid outlet 333 and the one or more lid inlets 3330. In some implementations, the sizes of the one or more lid inlets 3330 may be increased when the distances between the outlet hole of the fluid outlet 333 and the one or more lid inlets 3330 are increased. Thus, in FIG. 6B, the leftmost one of the lid inlets 3330 may be the smallest one of the lid inlets 3330, and the rightmost one of the lid inlets 3330 may be the biggest one of the lid inlets 3330.

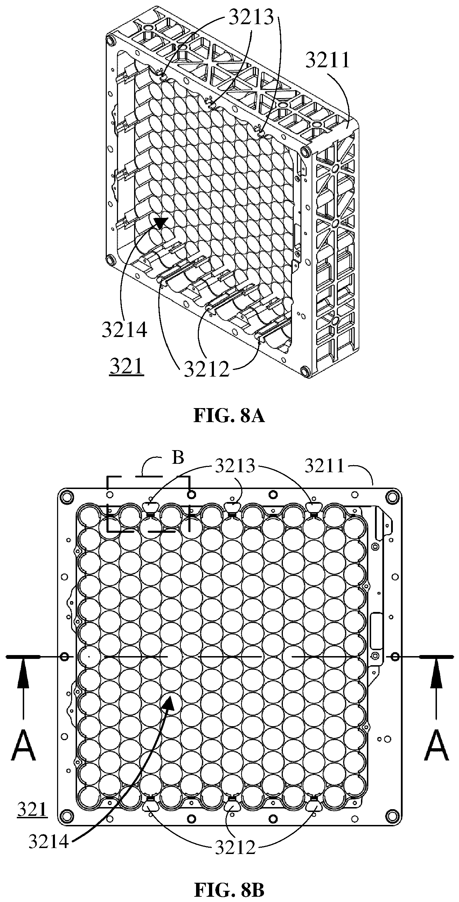

FIG. 8A illustrates a perspective view of the battery case 321 illustrated in FIG. 5, according to an example implementation of the present disclosure, and FIG. 8B illustrates a front view of the battery case 321 illustrated in FIG. 5, according to an example implementation of the present disclosure.

In some implementations, the battery case 321 may further include the case frame 3211, the one or more inlet channels 3212, the one or more outlet channels 3213, and an accommodation region 3214. In some implementations, each of the one or more inlet channels 3212 and the one or more outlet channels 3213 may be a through-hole going through the case frame 3211. Thus, with reference to FIG. 5 and FIG. 8A, when the battery case 321 is coupled to the front lid 310, each of the one or more inlet channels 3212 may be coupled to a corresponding one of the one or more lid outlets 3110. In some implementations, when the battery case 321 is coupled to the front lid 310, each of the one or more inlet channels 3212 may be aligned with a corresponding one of the one or more lid outlets 3110 for the fluid to flow from the one or more lid outlets 3110 into the one or more inlet channels 3212 and to further flow out of the battery case 321 from the one or more inlet channels 3212.

In some implementations, when the battery case 322 is coupled to the battery case 321, each of the one or more outlet channels 3223 may be coupled to a corresponding one of the one or more outlet channels 3213. In some implementations, when the battery case 322 is coupled to the battery case 321, each of the one or more outlet channels 3223 may be aligned with a corresponding one of the one or more outlet channels 3213 for the fluid to flow from the one or more outlet channels 3213 into the one or more outlet channels 3223 and to further flow out of the battery case 322 from the one or more outlet channels 3223.

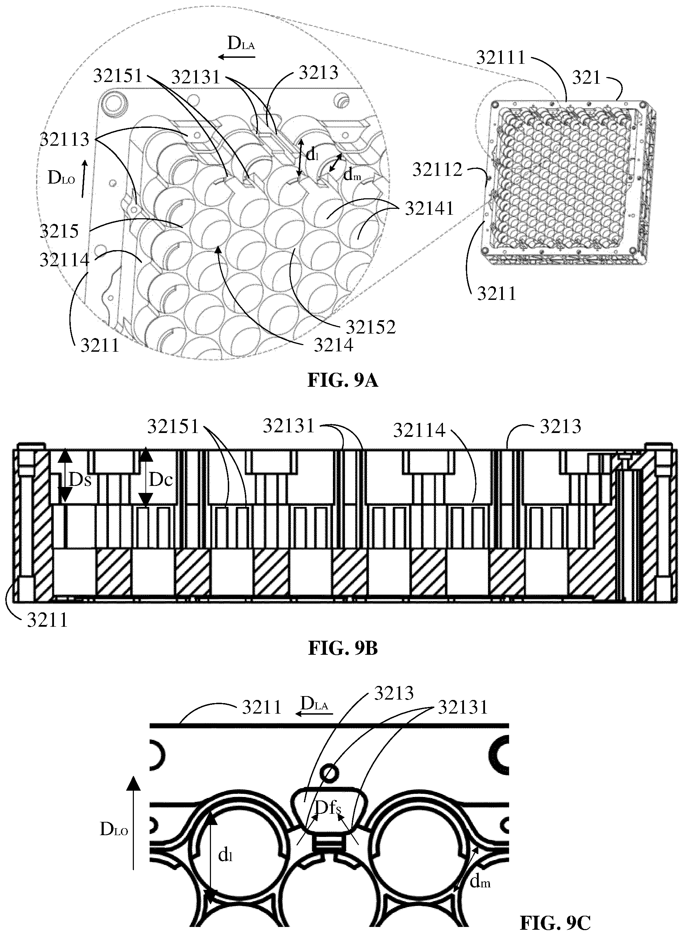

FIG. 9A illustrates a partially enlarged view of a top-left corner of the battery case 321 illustrated in FIG. 8A, according to an example implementation of the present disclosure. FIG. 9B illustrates a cross-sectional view of the battery case 321 taken along line A-A of FIG. 8B, according to an example implementation of the present disclosure. FIG. 9C illustrates an enlarged view of a region B illustrated in FIG. 8B, according to an example implementation of the present disclosure. In some implementations, the battery case 321 may further include a cell holder 3215.

In some implementations, the case frame 3211 may further include two lateral edges 32111, two longitudinal edges 32112, a plurality of upper support planes 32113 extended from the two lateral edges 32111 and the two longitudinal edges 32112, and a lower support plane 32114 extended from the two lateral edges 32111 and the two longitudinal edges 32112. In some implementations, the upper support planes 32113 and the lower support plane 32114 may be used to support a cell support (not shown). In some implementations, the cell support and the cell holder 3215 may be used to receive and support a plurality of battery cells (not shown). For example, the cell holder 3215 may receive one of two sides of the battery cells, and the cell support may receive the other side of the battery cells.

In some implementations, each of the one or more outlet channels 3213 may further include one or more outlet slits 32131 for the fluid to flow from the accommodation region 3214 into a corresponding one of the one or more outlet channels 3213 for cooling the battery cells in the accommodation region 3214. Thus, the accommodation region 3214 may be coupled to the one or more outlet channels 3213 for allowing the fluid to flow from the accommodation region 3214 into the one or more outlet channels 3213 and to flow out of the fluid outlet 333 of the battery module 30. In some implementations, the one or more outlet slits 32131 may include at least one lateral slit. An angle between one of the two lateral edges 32111 and a flowing direction Dfs of the fluid flowing through one of the at least one lateral slit may be an acute angle. In some implementations, the at least one lateral slit may be used to provide a horizontal component of the flowing direction Dfs for guiding the fluid to flow towards the corners of the accommodation region 3214. Thus, the fluid may fully flow through the battery case 321 and the temperature of the fluid in the battery case 321 may be decreased more uniformly.

In some implementations, a plurality of cell holes 32141 included in the accommodation region 3214 may be formed by the cell holder 3215 coupled to the case frame 3211. Each of the cell holes 32141 formed by the cell holder 3215 may be used to receive one of the two sides of the battery cells. In some implementations, the cell holder 3215 may include a plurality of extended columns 32151 that are extended from an internal surface 32152 of the cell holder 3215. In some implementations, the extended columns 32151 may be disposed along the two lateral edges 32111. Thus, with reference to FIG. 8A and FIG. 9A, a portion of the extended columns 32151 may neighbor one of the two lateral edges 32111 having the one or more inlet channels 3212, and the other portion of the extended columns 32151 may neighbor the other of the two lateral edges 32111 having the one or more outlet channels 3213. In other words, a portion of the extended columns 32151 may neighbor the one or more inlet channels 3212, and the remaining portion of the extended columns 32151 may neighbor the one or more outlet channels 3213.

In some implementations, each of the extended columns 32151 may be extended from the cell holder 3215 between three neighboring cell holes 32141. In some implementations, the extended columns 32151 may be disposed neighboring one of the two lateral edges 32111. In some implementations, distances between the extended columns 32151 and the one of the two lateral edges 32111 may be close to a diameter of the cell holes 32141. In some implementations, distances between the extended columns 32151 and the one of the two lateral edges 32111 may be equal to or less than the diameter of the cell holes 32141. In some implementations, the minimum distance dₘ between the extended columns 32151 and the one of the two lateral edges 32111 may be less than the diameter of the cell holes 32141. In some implementations, the longitudinal distance di between a center of the extended column 32151 and a curved wall of the battery case 321 along a longitudinal direction D_{LO} may be less than the diameter of the cell holes 32141.

In some implementations, distances Ds between the lower support plane 32114 and an external surface of the case frame may be slightly shorter than distances Dc between the extended columns 32151 and the external surface of the case frame. Thus, when the cell support covers the accommodation region 3214, a distance between the cell support and the extended columns 32151 may be equal to a difference between the distances Ds and Dc. In addition, the distance between the cell support and the extended columns 32151 may be shorter than a threshold distance to prevent the fluid from flowing through the extended columns 32151. In other words, the fluid may not flow through the extended columns 32151, such that the extended columns may guide the fluid to flow, along a lateral direction D_{LA}, towards the corners of the accommodation region 3214 when the fluid flows through the at least one lateral slit. Thus, the fluid may fully flow through the battery case 321 and the temperature of the fluid in the battery case 321 may be decreased more uniformly.

With reference to FIG. 8A and FIG. 9A, in some implementations, each of the inlet channels 3212 may further include one or more inlet slits for the fluid to flow from the inlet channels 3212 into the accommodation region 3214 for cooling the battery cells in the accommodation region 3214. In some implementations, the one or more inlet slits may include at least one lateral slit. An angle between one of the two lateral edges 32111 and a flowing direction Dfs of the fluid flowing through one of the at least one lateral slit of the one or more inlet slits may be an acute angle. In some implementations, the at least one lateral slit of the one or more inlet slits may be used to provide a horizontal component of the flowing direction Dfs for guiding the fluid to flow towards the corners of the accommodation region 3214. Thus, the fluid may fully flow through the battery case 321 and the temperature of the fluid in the battery case 321 may be decreased more uniformly.

In some implementations, the flowing direction of the fluid flowing through the one or more inlet channels 3212 may be parallel to an assembly direction between the battery case 321 and the front lid 310 and may be perpendicular to the flowing direction Dfs of the fluid flowing through the one or more inlet slits. In some implementations, the flowing direction of the fluid flowing through the one or more outlet channels 3213 may be parallel to the assembly direction and perpendicular to the flowing direction Dfs of the fluid flowing through the one or more outlet slits 32131.

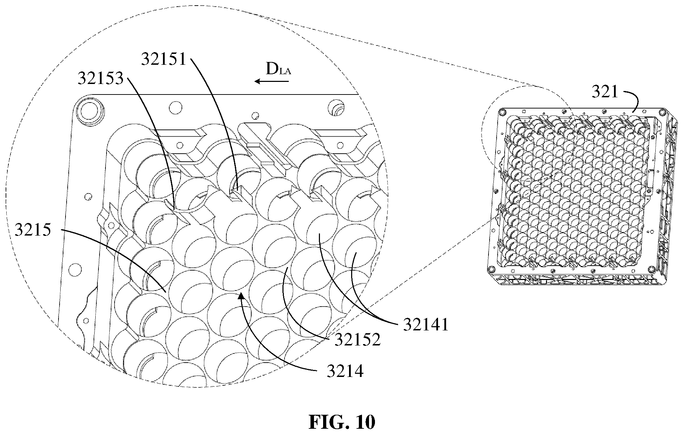

FIG. 10 illustrates a partially enlarged view of a top-left corner of the battery case 321, according to another example implementation of the present disclosure.

In some implementations, a plurality of cell holes 32141 may be formed by the cell holder 3215 coupled to the case frame 3211 for accommodating the battery cells in an accommodation region 3214. Each of the cell holes 32141 formed by the cell holder 3215 may be used to receive one of the two sides of the battery cells. In some implementations, the cell holder 3215 may further include a plurality of extended columns 32151 and a plurality of extended walls 32153, each extended from an internal surface 32152 of the cell holder 3215. In some implementations, the extended columns 32151 in FIG. 10 may be identical to the extended columns 32151 in FIG. 9A. In some implementations, the extended walls 32153 may be disposed such that to neighbor four corners of the cell holder 3215. In some implementations, each of the extended walls 32153 may be extended from the cell holder 3215 and may be sandwiched between two neighboring cell holes 32141.

With reference to FIG. 9B and FIG. 10, In some implementations, a distance Ds between the lower support plane 32114 and the external surface of the case frame may be slightly shorter than distances Dc between the extended columns 32151 and the external surface of the case frame, which are identical to distances between the extended walls 32153 and the external surface of the case frame. Thus, when the cell support covers the accommodation region 3214, a distance between the cell support and each extended wall 32153 may be equal to the difference between the distances Ds and Dc. In addition, the distance between the cell support and each extended wall 32153 may be shorter than the threshold distance to prevent the fluid from flowing through the extended walls 32153. In other words, the fluid may not flow through the extended walls 32153, resulting in the extended walls 32153 guiding the fluid to flow, along the lateral direction D_{LA}, towards the corners of the accommodation region 3214. Thus, the fluid may fully flow through the battery case 321 and the temperature of the fluid in the battery case 321 may be decreased more uniformly.

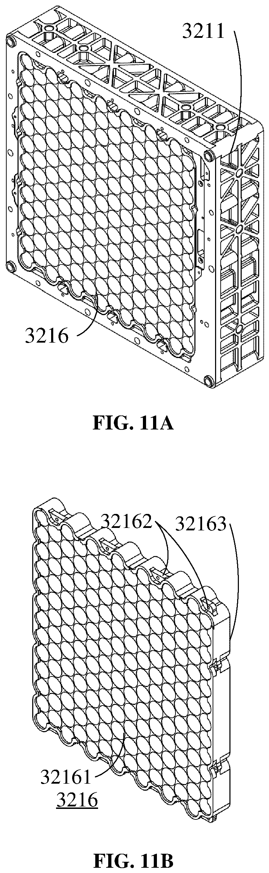

FIG. 11A illustrates a perspective view of a cell support 3216, according to an example implementation of the present disclosure, and FIG. 11B illustrates a perspective view of a combination of the battery case 321 illustrated in FIG. 8A and the cell support 3216 illustrated in FIG. 11A, according to an example implementation of the present disclosure.

In some implementations, the cell support 3216 may include a plurality of supporting holes 32161, a plurality of side planes 32162, and a lower surface 32163. With reference to FIG. 9A and 11A, the cell holes 32141 formed by the cell holder 3215 may receive one of the two sides of the battery cells, and the supporting holes 32161 of the cell support 3216 may receive the other side of the battery cells. In some implementations, the side planes 32162 may be coupled to the upper support plane 32113, and the lower surface 32163 may be coupled to the lower support plane 32114 when the cell support 3216 is accommodated in the case frame 3211.

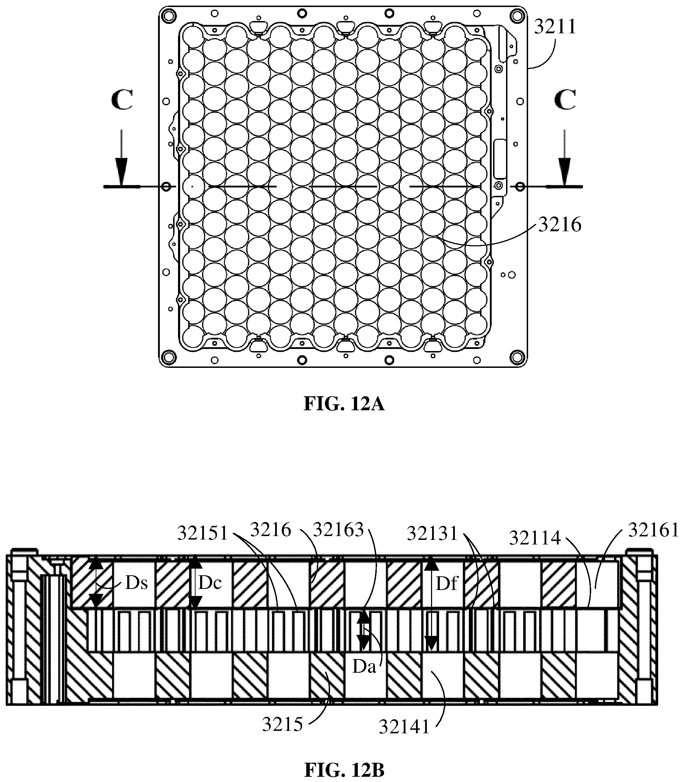

FIG. 12A illustrates a front view of the combination of the battery case 321 and the cell support 3216 illustrated in FIG. 11B, according to an example implementation of the present disclosure. FIG. 12B illustrates a cross-sectional view of the combination of the battery case 321 and the cell support 3216 illustrated in FIG. 12A, taken along line C-C of FIG. 12A, according to an example implementation of the present disclosure.

In some implementations, each of the cell holes 32141 formed by the cell holder 3215 may be aligned with the supporting holes 32161 of the cell support 3216. With reference to FIGS. 9B and 12B, the cell support 3216 may be supported by the lower support plane 32114 of the case frame 3211. In some implementations, since the cell support 3216 is accommodated in the case frame 3211, a portion of each outlet slits 32131 may be obstructed by the cell support 3216. Thus, the fluid may flow from the accommodation region 3214 into the one or more outlet channels 3213 through unobstructed portions of each outlet slits 32131. Similarly, with reference to FIG. 8B and FIG. 12A, in some implementations, since the cell support 3216 is accommodated in the case frame 3211, a portion of each inlet slit of the inlet channels 3212 may be obstructed by the cell support 3216. Thus, the fluid may flow into the accommodation region 3214 from the one or more inlet channels 3212 through unobstructed portions of each inlet slit of the inlet channels 3212.

With reference to FIGS. 9A and 12B, in some implementations, a distance Df between the internal surface 32152 of the cell holder 3215 and the external surface of the case frame 3211 may be substantially longer than a distance Da between the internal surface 32152 of the cell holder 3215 and the lower surface 32163 of the cell support 3216. In some implementations, the lengths of the unobstructed portion of each outlet slit 32131 may be equal to a difference between the distance Df and the distance Da. Thus, when the fluid flows into the outlet channels 3213, the fluid may flow through the unobstructed portions of each outlet slit 32131 into the outlet channels 3213 since the lengths of the unobstructed portions of each outlet slit 32131 may be long enough for the fluid to easily flow into the outlet channels 3213.

Similarly, with reference to FIG. 8B and FIG. 12A, in some implementations, the length of the unobstructed portion of each inlet slit may be equal to the difference between the distances Df and Da. Thus, when the fluid flows into the accommodation region 3214 from the inlet channels 3212, the fluid may flow through the unobstructed portions of each inlet slit from the inlet channels 3212 into the accommodation region 3214 since the lengths of the unobstructed portion of each inlet slit of the inlet channels 3212 may be long enough for the fluid to flow into the accommodation region 3214.

In some implementations, a distance Ds between the lower support plane 32114 and an external surface of the case frame may be slightly shorter than a distance Dc between the extended columns 32151 and the external surface of the case frame. Thus, when the cell support 3216 covers the accommodation region 3214, a distance between the cell support 3216 and the extended columns 32151 may be equal to the difference between the distances Ds and Dc. In addition, the distance between the cell support 3216 and the extended columns 32151 may be shorter than a threshold distance to prevent the fluid from flowing through the extended columns 32151. In other words, the fluid may not flow through the extended columns 32151, resulting in the extended columns guiding the fluid to flow, along the lateral direction D_{LA} in FIG. 9C, towards the corners of the accommodation region 3214. Thus, the fluid may fully flow through the battery case 321 and the temperature of the fluid in the battery case 321 may be decreased more uniformly.

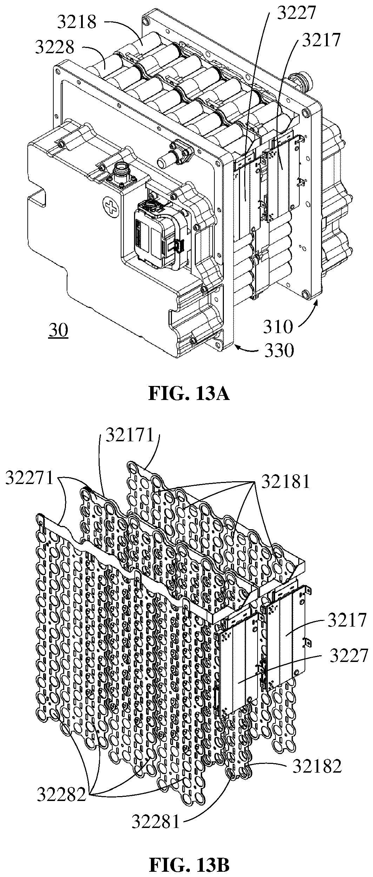

FIG. 13A illustrates a perspective view of a battery module 30 illustrated in FIG. 4B without the case frames 3211 and 3221 illustrated in FIG. 5, according to an example implementation of the present disclosure. FIG. 13B illustrates electronic connection structures of management circuits 3217 and 3227 illustrated in FIG. 13A, according to example implementations of the present disclosure.

With reference to FIG. 4B and FIG. 13A, in some implementations, each of the battery cases 321 and 322 may include a corresponding one of the management circuits 3217 and 3227 installed in a corresponding one of the case frames 3211 and 3221. In some implementations, the management circuit 3217 may be coupled to the management circuit 3227. In some implementations, an electrical connector of the management circuit 3217 may be installed on the battery case 321 and may be exposed on the case frame 3211. An electrical connector of the management circuit 3227 may be installed on the battery case 322 and may be exposed on the case frame 3221. When the battery cases 321 and 322 are coupled to each other, the electrical connector of the management circuit 3217 may also be directly or electrically coupled to the electrical connector of the management circuit 3227. Thus, the electrical connectors of the management circuit 3217 and the management circuit 3227 may not be exposed out of the battery cases 321 and 322 when the battery cases 321 and 322 are coupled to each other.

In some implementations, each of the battery cases 321 and 322 may also include a plurality of battery cells 3218 and 3228. In some implementations, the battery case 321 may further include a plurality of case electrodes 32181 and 32182, and each of the battery cells 3218 may be coupled to one of the case electrodes 32181 and one of the case electrodes 32182. In some implementations, the battery case 322 may further include a plurality of case electrodes 32181 and 32182, and each of the battery cells 3218 may be coupled to one of the case electrodes 32181 and one of the case electrodes 32182. In some implementations, the plurality of case electrodes 32181, 32182, 32281, and 32282 may be used to connect the battery cells 3218 and 3228 to each other. In addition, the battery cells 3218 and 3228 may be coupled to each other in series or in parallel by the plurality of case electrodes 32181, 32182, 32281, and 32282. With reference to FIGS. 4A-4B and FIG. 13A, in some implementations, one of the plurality of case electrodes 32181 may be electrically coupled to the first battery interface 312, and one of the plurality of case electrodes 32282 may be electrically coupled to the second battery interface 334. In addition, one of the plurality of case electrodes 32182 may be electrically coupled to one of the plurality of case electrodes 32281. Thus, electrical power may be output from or stored into the battery cells 3218 and 3228 through the first battery interface 312 and the second battery interface 334.

In some implementations, the management circuit 3217 may be electrically coupled to the case electrodes 32181 and 32182 and a plurality of connection circuits 32171. The connection circuits 32171 may be electrically coupled to at least one of the case electrodes 32181 and 32182. In some implementations, the case electrodes 32181 and 32182 and the connection circuits 32171 may be accommodated in the accommodation region 3214 of the battery case 321, such that the case electrodes 32181 and 32182 and the connection circuits 32171 may be immersed in the fluid contained in the battery case 321. In some implementations, the management circuit 3227 may be coupled to the case electrodes 32281 and 32282 through a plurality of connection circuits 32271. The plurality of connection circuits 32271 may be coupled to the case electrodes 32281 and 32282. In some implementations, the case electrodes 32281 and 32282, and the connection circuits 32271, may be immersed in the fluid contained in the battery case 322. In some implementations, the connection circuits 32171 and 32271 may be flexible printed circuits (FPCs).

In some implementations, the connection circuits 32171 and 32271 may be used to measure voltages and temperatures of the case electrodes 32181, 32182, 32281, and 32282 to provide measured results to the management circuits 3217 and 3227. In some implementations, the management circuits 3217 and 3227 may control temperatures and voltages of the battery cells 3218 and 3228, and the connection circuits 32171 and 32271 based on the measured results for controlling the temperature of the fluid. For example, the management circuit 3217 may control/use the connection circuits 32171 to convert the electrical power of the battery cells 3218, that each is coupled to the case electrodes 32181 and 32182, into heat for controlling the voltages and the temperatures of the battery cells 3218.

In some implementations, the management circuit 3227 may control/use the connection circuits 32271 to convert the electrical power of the battery cells 3228 into heat for controlling the voltages and the temperatures of the battery cells 3228. Thus, the electrical power of the battery cells 3218 and 3228 may be directly used to heat the fluid and the battery cells 3218 and 3228 for increasing the temperature of the fluid when the management circuits 3217 and 3227 controls the temperature of the connection circuits 32171 and 32271. Therefore, due to functions of the volage control and the temperature control of the management circuits 3217 and 3227, there may be no additional heating equipment installed in the battery module 30. In addition, since the management circuits 3217 and 3227, and the connection circuits 32171 and 32271 may be installed in the battery cases 321 and 322 rather than exposed out of the battery module 30, the possibility of component damage may be decreased while the possibility of component durability may be increased.

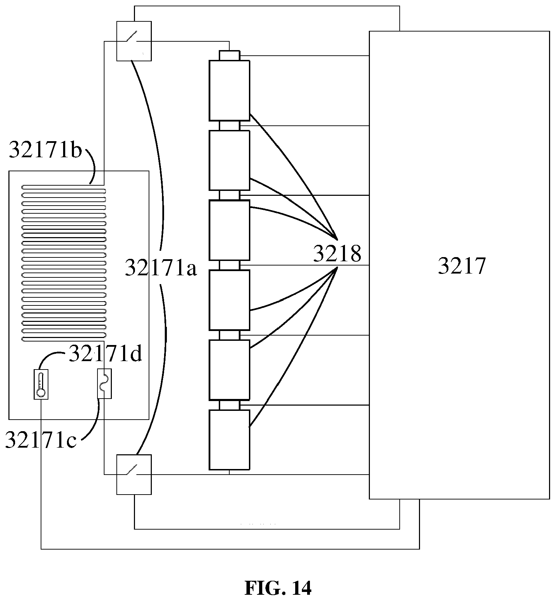

FIG. 14 illustrates a circuit diagram of the battery cells 3218, the management circuit 3217, and the connection circuits 32171 illustrated in FIG. 13A and FIG. 13B, according to an example implementation of the present disclosure.

With reference to FIG. 13B and FIG. 14, in some implementations, the connection circuits 32171 may further include one or more switches 32171a and a circuit heater 32171b. In some implementations, the one or more switches 32171a may be coupled to the battery cells 3218, the management circuit 3217, and the circuit heater 32171b. In some implementations, the management circuit 32171 may control the one or more switches 32171a to be turned ON or OFF. In some implementations, when the one or more switches 32171a are turned OFF by the management circuit 3217, the current of the battery cells 3218 may not flow through the circuit heater 32171b. Thus, the circuit heater 32171b may not convert the electrical power of the battery cells 3218 into heat. In some implementations, when the one or more switches 32171a are turned ON by the management circuit 3217, the current of the battery cells 3218 may flow through the circuit heater 32171b. Thus, the circuit heater 32171b may convert the electrical power of the battery cells 3218 into heat to heat the battery cells 3218 and the fluid contained in the battery case 321. In some implementations, the circuit heater 32171b may be a heating copper trace.

In some implementations, the connection circuits 32171 may further include an electrical safety device 32171c coupled to the one or more switches 32171a and the circuit heater 32171b. In some implementations, the electrical safety device 32171c may include a wire or strip of fusible metal that melts or interrupts the circuit when the current exceeds a threshold current. Thus, when the current of the circuit heater 32171b exceeds the threshold current, the electrical safety device 32171c may shut down the current to stop heating the fluid and the battery cells 3218.

In some implementations, the connection circuits 32171 may further include a temperature sensor 32171d coupled to the management circuit 3217. The management circuit 3217 may control the temperature sensor 32171d to monitor the temperature of the fluid and the battery cells 3218.

Therefore, the electrical power of the battery cells 3218 may be directly used to heat the fluid and the battery cells 3218. Due to the functions of volage control and temperature control of the management circuit 3217, no additional heating equipment may be required to be installed in the battery module 30. In addition, since the management circuit 3217 and the one or more switches 32171a and the circuit heater 32171b of the connection circuits 32171 may be installed in the battery case 321 rather than being exposed out of the battery module 30, the possibility of damaging the management circuit 3217 and the connection circuits 32171 may be decreased and the durability of the management circuit 3217 and the connection circuits 32171 may be increased.

The embodiments shown and described above are only examples. Many details are often found in the art. Therefore, many such details are neither shown nor described. Even though numerous characteristics and advantages of the present disclosure have been set forth in the foregoing description, together with details of the structure and function of the present disclosure, the present disclosure is illustrative only, and changes may be made in the details. It will therefore be appreciated that the embodiment described above may be modified within the scope of the claims.

## Claims

1. A battery module (10, 20, 30), comprising:
a front lid (110, 210, 310) comprising a fluid inlet (111, 211, 311) for a fluid to flow into the battery module (10, 20, 30); and
a battery case (121-123, 221-226, 321-322) coupled to the front lid (110, 210, 310) and having an accommodation region (1214, 1224, 1234, 2214, 2224, 2234, 2244, 2254, 2264, 3214, 3224) for accommodating a plurality of battery cells (3218, 3228), the battery case (121-123, 221-226, 321-322) further comprising:
a case frame (1211, 1221, 1231, 2211, 2221, 2231, 2241, 2251, 2261, 3211, 3221);
one or more inlet channels (1212, 1222, 1232, 2212, 2222, 2232, 2242, 2252, 2262, 3212, 3222), each receiving the fluid from the fluid inlet (111, 211, 311) and going through the case frame (1211, 1221, 1231, 2211, 2221, 2231, 2241, 2251, 2261, 3211, 3221) for the fluid to flow through the battery case (121-123, 221-226, 321-322), wherein each of the one or more inlet channels (1212, 1222, 1232, 2212, 2222, 2232, 2242, 2252, 2262, 3212, 3222) comprises one or more inlet slits for the fluid to flow into the accommodation region (1214, 1224, 1234, 2214, 2224, 2234, 2244, 2254, 2264, 3214, 3224) for cooling the plurality of battery cells (3218, 3228); and
one or more outlet channels (1213, 1223, 1233, 2213, 2223, 2233, 2243, 2253, 2263, 3213, 3223), each going through the case frame (1211, 1221, 1231, 2211, 2221, 2231, 2241, 2251, 2261, 3211, 3221) for the fluid to flow through the battery case (121-123, 221-226, 321-322), wherein the accommodation region (1214, 1224, 1234, 2214, 2224, 2234, 2244, 2254, 2264, 3214, 3224) is coupled to the one or more outlet channels (1213, 1223, 1233, 2213, 2223, 2233, 2243, 2253, 2263, 3213, 3223) for the fluid to flow out of a fluid outlet (113, 133, 213, 333) of the battery module (10, 20, 30).

2. The battery module (10, 20, 30) of claim 1, wherein:
the front lid (110, 210, 310) further comprises the fluid outlet (113, 213), one or more lid inlets (2130), and one or more lid outlets (1110, 2110, 3110),
each of the one or more inlet channels (1212, 1222, 1232, 2212, 2222, 2232, 2242, 2252, 2262, 3212, 3222) is coupled to a corresponding one of the one or more lid outlets (1110, 2110, 3110) for the fluid to flow from the front lid (110, 210, 310) into the battery case (121-123, 221-226, 321-322),
each of the one or more outlet channels (1213, 1223, 1233, 2213, 2223, 2233, 2243, 2253, 2263, 3213, 3223) comprises one or more outlet slits (32131) for the fluid to flow from the accommodation region (1214, 1224, 1234, 2214, 2224, 2234, 2244, 2254, 2264, 3214, 3224) into a corresponding one of the one or more outlet channels (1213, 1223, 1233, 2213, 2223, 2233, 2243, 2253, 2263, 3213, 3223), and
each of the one or more outlet channels (1213, 1223, 1233, 2213, 2223, 2233, 2243, 2253, 2263, 3213, 3223) is coupled to a corresponding one of the one or more lid inlets (2130) for the fluid to flow from the battery case (121-123, 221-226, 321-322) back to the front lid (110, 210, 310).

3. The battery module (10, 20, 30) of claim 1, further comprising:
a back lid (130, 230, 330) comprising the fluid outlet (133, 333) and one or more lid inlets (1330, 3330) for the fluid to flow out of the battery module (10, 20, 30), wherein:
each of the one or more outlet channels (1213, 1223, 1233, 2213, 2223, 2233, 2243, 2253, 2263, 3213, 3223) comprises one or more outlet slits (32131) for the fluid to flow from the accommodation region (1214, 1224, 1234, 2214, 2224, 2234, 2244, 2254, 2264, 3214, 3224) into a corresponding one of the one or more outlet channels (1213, 1223, 1233, 2213, 2223, 2233, 2243, 2253, 2263, 3213, 3223),
each of the one or more outlet channels (1213, 1223, 1233, 2213, 2223, 2233, 2243, 2253, 2263, 3213, 3223) is coupled to a corresponding one of the one or more lid inlets (1330, 3330) for the fluid to flow from the battery case (121-123, 221-226, 321-322) to the back lid (130, 230, 330), and
each of the one or more inlet channels (1212, 1222, 1232, 2212, 2222, 2232, 2242, 2252, 2262, 3212, 3222) is coupled to a corresponding one of one or more lid outlets (1110, 2110, 3110) on the front lid (110, 210, 310) for the fluid to flow from the front lid (110, 210, 310) into the battery case (121-123, 221-226, 321-322).

4. The battery module (10, 20, 30) of claim 2 or 3, wherein:
sizes of the one or more lid outlets (1110, 2110, 3110) are different from each other; and/or
sizes of the one or more lid outlets (1110, 2110, 3110) are associated with distances between the fluid inlet (111, 211, 311) and the one or more lid outlets (1110, 2110, 3110).

5. The battery module (10, 20, 30) of claim 2, 3, or 4, wherein:
the one or more outlet slits (32131) comprise at least one lateral slit, and
an angle between a lateral edge of the case frame (1211, 1221, 1231, 2211, 2221, 2231, 2241, 2251, 2261, 3211, 3221) and a flowing direction of the fluid flowing through the at least one lateral slit is an acute angle.

6. The battery module (10, 20, 30) of any preceding claim, wherein a flowing direction of the fluid flowing through the one or more inlet channels (1212, 1222, 1232, 2212, 2222, 2232, 2242, 2252, 2262, 3212, 3222) is perpendicular to a flowing direction of the fluid flowing through the one or more inlet slits.

7. The battery module (10, 20, 30) of any preceding claim, wherein:
the one or more inlet slits comprise at least one lateral slit, and
an angle between a lateral edge of the case frame (1211, 1221, 1231, 2211, 2221, 2231, 2241, 2251, 2261, 3211, 3221) and a flowing direction of the fluid flowing through the at least one lateral slit is an acute angle.

8. The battery module (10, 20, 30) of claim 5, 6 or 7, further comprising:
a cell holder (3215) coupled to the case frame (1211, 1221, 1231, 2211, 2221, 2231, 2241, 2251, 2261, 3211, 3221) and receiving the plurality of battery cells (3218, 3228), wherein:
the cell holder (3215) comprises a plurality of extended columns (32151), and
the plurality of extended columns (32151) guides the fluid to flow along a lateral direction when the fluid flows through a or the at least one lateral slit of the one or more inlet slits.

9. The battery module (10, 20, 30) of claim 8, further comprising:
a cell support (3216) for supporting the plurality of battery cells (3218, 3228) with the cell holder (3215), wherein a distance between the cell support (3216) and the plurality of extended columns (32151) is shorter than a threshold distance to prevent the fluid from flowing through the plurality of extended columns (32151);
and/or
wherein:
a portion of the plurality of extended columns (32151) neighbors the one or more inlet channels (1212, 1222, 1232, 2212, 2222, 2232, 2242, 2252, 2262, 3212, 3222), and the other portions of the plurality of extended columns (32151) neighbor the one or more outlet channels (1213, 1223, 1233, 2213, 2223, 2233, 2243, 2253, 2263, 3213, 3223).

10. A battery case (121-123, 221-226, 321-322) for installing in a battery module (10, 20, 30) and accommodating a plurality of battery cells (3218, 3228), the battery case (121-123, 221-226, 321-322) comprising:
a case frame (1211, 1221, 1231, 2211, 2221, 2231, 2241, 2251, 2261, 3211, 3221);
a cell holder (3215, 3225) coupled to the case frame (1211, 1221, 1231, 2211, 2221, 2231, 2241, 2251, 2261, 3211, 3221) for accommodating the plurality of battery cells (3218, 3228) in an accommodation region (1214, 1224, 1234, 2214, 2224, 2234, 2244, 2254, 2264, 3214, 3224);
one or more inlet channels (1212, 1222, 1232, 2212, 2222, 2232, 2242, 2252, 2262, 3212, 3222), each going through the case frame (1211, 1221, 1231, 2211, 2221, 2231, 2241, 2251, 2261, 3211, 3221) for a fluid to flow through the battery case (121-123, 221-226, 321-322), wherein each of the one or more inlet channels (1212, 1222, 1232, 2212, 2222, 2232, 2242, 2252, 2262, 3212, 3222) comprises one or more inlet slits for the fluid to flow into the accommodation region (1214, 1224, 1234, 2214, 2224, 2234, 2244, 2254, 2264, 3214, 3224) for cooling the plurality of battery cells (3218, 3228); and
one or more outlet channels (1213, 1223, 1233, 2213, 2223, 2233, 2243, 2253, 2263, 3213, 3223), each going through the case frame (1211, 1221, 1231, 2211, 2221, 2231, 2241, 2251, 2261, 3211, 3221) for the fluid to flow through the battery case (121-123, 221-226, 321-322), wherein the fluid flows from the accommodation region (1214, 1224, 1234, 2214, 2224, 2234, 2244, 2254, 2264, 3214, 3224) into the one or more outlet channels (1213, 1223, 1233, 2213, 2223, 2233, 2243, 2253, 2263, 3213, 3223) for flowing out of a fluid outlet (113, 133, 213, 333) of the battery module (10, 20, 30).

11. The battery case (121-123, 221-226, 321-322) of claim 10, wherein:
each of the one or more outlet channels (1213, 1223, 1233, 2213, 2223, 2233, 2243, 2253, 2263, 3213, 3223) further comprises one or more outlet slits (32131) for the fluid to flow from the accommodation region (1214, 1224, 1234, 2214, 2224, 2234, 2244, 2254, 2264, 3214, 3224) into a corresponding one of the one or more outlet channels (1213, 1223, 1233, 2213, 2223, 2233, 2243, 2253, 2263, 3213, 3223) and to flow out of the fluid outlet (113, 133, 213, 333) of the battery module (10, 20, 30),
the one or more outlet slits (32131) comprise at least one lateral slit and/or the one or more inlet slits comprise at least one lateral slit, and
an angle between a lateral edge of the case frame (1211, 1221, 1231, 2211, 2221, 2231, 2241, 2251, 2261, 3211, 3221) and a flowing direction of the fluid flowing through the at least one lateral slit is an acute angle.

12. The battery case (121-123, 221-226, 321-322) of claim 10 or 11, wherein:
the cell holder (3215) comprises a plurality of extended columns (32151) extended from an internal surface (32152) of the cell holder (3215), and
the plurality of extended columns (32151) guides the fluid to flow along a lateral direction when the fluid flows through a or the at least one lateral slit of the one or more inlet slits.

13. The battery case (121-123, 221-226, 321-322) of claim 12, further comprising:
a cell support (3216) supports the plurality of battery cells (3218, 3228) with the cell holder (3215), wherein
a distance between the cell support (3216) and the plurality of extended columns (32151) is shorter than a threshold distance to prevent the fluid from flowing through the plurality of extended columns (32151) ;
and/or
wherein:
a portion of the plurality of extended columns (32151) neighbors the one or more inlet channels (1212, 1222, 1232, 2212, 2222, 2232, 2242, 2252, 2262, 3212, 3222), and the other portions of the plurality of extended columns (32151) neighbor the one or more outlet channels (1213, 1223, 1233, 2213, 2223, 2233, 2243, 2253, 2263, 3213, 3223).

14. A battery module (10, 20, 30), comprising:
a battery case (121-123, 221-226, 321-322) accommodating a plurality of case electrodes (32181, 32182) and having an accommodation region (1214, 1224, 1234, 2214, 2224, 2234, 2244, 2254, 2264, 3214, 3224) for accommodating a plurality of battery cells (3218, 3228), the battery case (121-123, 221-226, 321-322) further comprising:
a case frame (1211, 1221, 1231, 2211, 2221, 2231, 2241, 2251, 2261, 3211, 3221);
one or more inlet channels (1212, 1222, 1232, 2212, 2222, 2232, 2242, 2252, 2262, 3212, 3222), each going through the case frame (1211, 1221, 1231, 2211, 2221, 2231, 2241, 2251, 2261, 3211, 3221) for a fluid to flow through the battery case (121-123, 221-226, 321-322), wherein each of the one or more inlet channels (1212, 1222, 1232, 2212, 2222, 2232, 2242, 2252, 2262, 3212, 3222) comprises one or more inlet slits for the fluid to flow into the accommodation region (1214, 1224, 1234, 2214, 2224, 2234, 2244, 2254, 2264, 3214, 3224) for cooling the plurality of battery cells (3218, 3228); and
one or more outlet channels (1213, 1223, 1233, 2213, 2223, 2233, 2243, 2253, 2263, 3213, 3223) for the fluid to flow out of the accommodation region (1214, 1224, 1234, 2214, 2224, 2234, 2244, 2254, 2264, 3214, 3224), wherein each of the one or more outlet channels (1213, 1223, 1233, 2213, 2223, 2233, 2243, 2253, 2263, 3213, 3223) goes through the case frame (1211, 1221, 1231, 2211, 2221, 2231, 2241, 2251, 2261, 3211, 3221) for the fluid to flow through the battery case (121-123, 221-226, 321-322);
a first circuit (32171, 32271) installed in the case frame (1211, 1221, 1231, 2211, 2221, 2231, 2241, 2251, 2261, 3211, 3221) and electrically coupled to at least one of the plurality of case electrodes (32181, 32182); and
a second circuit (3217, 3227) installed in the case frame (1211, 1221, 1231, 2211, 2221, 2231, 2241, 2251, 2261, 3211, 3221) and electrically coupled to the first circuit (32171, 32271) to control a temperature of the first circuit (32171, 32271) for controlling a temperature of the fluid.

15. The battery module (10, 20, 30) of claim 14, wherein:
the second circuit (3217, 3227) comprises one or more electrical connectors exposed on the case frame (1211, 1221, 1231, 2211, 2221, 2231, 2241, 2251, 2261, 3211, 3221) for coupling to other electrical connectors of another second circuit (3217, 3227);
and/or
wherein: the second circuit (3217, 3227) is immersed into the fluid, and
electrical power stored in at least one of the battery cells (3218, 3228) is converted into heat by the first circuit (32171, 32271) to increase the temperature of the fluid by the second circuit (3217, 3227) controlling the temperature of the first circuit (32171, 32271).
